(19) Europäisches Patentamt
European Patent Office
Office européen des brevets

(11) **EP 2 469 298 B1**

(12) **EUROPEAN PATENT SPECIFICATION**

(45) Date of publication and mention
of the grant of the patent:
**18.02.2015 Bulletin 2015/08**

(51) Int Cl.:
**G01S 13/87** (2006.01)

(21) Application number: **10196755.2**

(22) Date of filing: **23.12.2010**

(54) **Method and device for determining location of a target**

Verfahren und Vorrichtung zur Bestimmung der Position eines Ziels

Procédé et dispositif permettant de déterminer l'emplacement d'une cible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2012 Bulletin 2012/26**

(73) Proprietor: **Televic Healthcare NV**
**8870 Izegem (BE)**

(72) Inventors:
• **Crombez, Pieter**
**8200 Sint-Andries (BE)**

• **Gesquiere, John**
**8970 Poperinge (BE)**
• **Stubbe, Brecht**
**9840 De Pinte (BE)**

(74) Representative: **IPLodge bvba**
**Technologielaan 9**
**3001 Heverlee (BE)**

(56) References cited:
**EP-A2- 2 065 726     US-A- 4 494 119**
**US-A1- 2009 141 591     US-B1- 6 404 381**

## Description

### Field of the Invention

The present invention generally relates to the field of positioning or locating a target device. The target device is typically an object or a device carried or worn by a person.

### Background of the Invention

A large variety of systems for positioning assets or people exist being either stationary or mobile. Such systems comprise a plurality of target devices which are attached to the items which need to be located and a plurality of reference devices the location of which is known to the system. While existing systems are functional and prove their robustness for a specific application and/or environment, they are often complex, expensive and inaccurate especially when that environment is different or changing.

Traditional systems are based on radio frequency (RF) signals and apply triangulation whereby the target device transmits an RF signal which needs to be received by at least three reference devices. The position may be estimated based on the received signal strength or the time (difference) of arrival.

Other systems suggest the use of infrared (IR) technology. IR radiation is limited by walls and is very power hungry. On top of this, line-of-sight communication is required which is never guaranteed in a mobile positioning system. Yet other systems propose ultrasound. This technology is less vulnerable to obstacles and is also hindered by walls and is therefore more suited for (small) zone location systems. An example is such a solution is provided in patent application EP2065726 A2. One issue with these kinds of acoustic localization systems is that they require high output power and high driving voltages and that an aperture is required in the target and reference devices. An additional problem is the limited range due to a strong attenuation and the very limited capacity. The waves travel very slowly and the bandwidth is very limited thereby restricting the amount of transmitted data and the time occupying the medium (which is the time no other target device can be located).

Document US2009/141591 relates to a system for extending GPS to divers and underwater vehicles. The navigation system comprises a location reference unit and a plurality of sub-surface beacon units. The system applies a dual tone method, whereby acoustic signals transmitted at different frequencies attenuate at different rates. Distinct tones can be transmitted at different power levels with a known power ratio. The power in each tone attenuates as function of the distance travelled. The distance can be computed based on difference in received power if the attenuation rate for each tone component is known.

In US4494119 a distress radiolocation solution is disclosed that is based on direction finding techniques and signal strength calculations. Signal is recognized based on the duration of the pulse. Transmitters send a distress signal to a plurality of receivers that measure the received signal strength and report the signal strength to a central station that calculates a location (via traditional triangulation) based on RSSI and known location of beacons (repeaters). The central station dispatches a rescue unit. The applied processing of the signal strength measured by the repeaters makes it unnecessary to know the transmitted power.

US6404381 presents a radio sensor device for detecting the distance and/or the speed of an object relative to the sensor device. The sensor device is provided with an oscillator, which can be frequency detuned through the use of a modulation function. The radar sensor device has a power switch, which can be driven by a power control function, for varying the transmitter power. The sensor device is to be operated through the use of a variable setting of the modulation and power control functions.

### Aims of the invention

The present invention aims to provide a localization or positioning system with high accuracy and independent of the applied technology.

### Summary

This invention presents a system and method used to locate a target device within a restricted area, preferably indoor, whereby "target" can be understood as an asset or a device worn by people and basically intended for locating the wearer. More specifically, the invention relates to a method and system to locate targets in any building or institution where automated location is useful and which comprises either one or a combination of larger open spaces such as a cafeteria and harsh indoor environment with many walls, such as rooms in a corridor.

In a first aspect the present invention relates to a method for determining a location of a target device in connection with one or more beacons having a known position in a space, as specified in claim 1.The proposed solution is based on the use of trapped output powers of the transmitted signals to locate the target device which can be moving around in a space. This space is typically an indoor environment containing a mix of open spaces and small areas surrounded by walls such a corridor with rooms. Alternatively the space can be a parking lot, a warehouse, an operation room, ...

Exploiting these different trapped output powers, the location determination according to the invention is able to adapt itself to the specific environment. A successful measurement performed at lower output power has a higher level of confidence. In smaller areas surrounded by walls, a small output power has higher reliability of staying within the room so that the location method converges in the direction of a proximity measurement. In larger areas the higher output power guarantees sufficient range and the location method converges more to a traditional triangulation. With this invention the achieved accuracy is significantly improved in challenging areas (with more walls) such as rooms.

The method of the invention is deployed in a configuration comprising a target device to be located and a plurality of beacons with a known position and capable of communicating with the target device. The proposed method can be initiated either by the target device or by one of the beacons. The target device acts as a transmitter device, with which at least two signals are transmitted with a different transmit signal power. These transmitted signals are received by a receiver device, being a beacon of the plurality of beacons. For the received signals an indication of the received signal power is determined by the receiver device.

Then a weighted sum of the indications of the received signal power of the at least two received signals is taken, whereby the weights of the weighted sum take into account said different transmit signal powers. From the weighted sum distance information is derived, i.e. information on the distance between the transmitter and the receiver device. As the target device acts as transmitter device, the location of said target device can then be estimated via the distance information.

The information on the transmit signal power is comprised in the transmit signals. A data field in the transmit signal is kept for encapsulating this information.

In a preferred embodiment of the invention the indication of the received signal power is derived from the signal strength, e.g. the RSSI, and/or from a link quality indication. Such link quality is a metric of the current quality of the received signal. The link quality gives an estimate of how easily a received signal can be demodulated by accumulating the magnitude of the error between ideal constellations and the received signal. It is hence depending on the modulation format. On the other hand, RSSI is simply a signal strength indication. It does not care about the "quality" or "correctness" of the signal. Link quality does not care about the actual signal strength, but the signal quality often is related to signal strength. It is to be noted that the use of other parameters can be envisaged as well for the weighting by means of transmitted power.

The target device and the beacons are preferably arranged for both transmitting and receiving, i.e. they are to be considered as transceivers. In a preferred embodiment of the method of the invention the receiver device transmits a response to the received signal using a signal with a transmit signal power depending on the information on the transmit signal power contained in the received signal. Hence, the transmit signal power applied in the response signal is determined by the transmit power used for the original message. This offers the advantage that two different measurements resulting in two data pairs (transmitted power, received power) are obtained with only a single bidirectional communication link. In this way, the power is selected such that there is a high reliability that the signal arrives at its destination. Too low and too high powers are therefore avoided improving the efficiency of the method described in this invention. The invention is however not limited to bidirectional communication and can be applied with only unidirectional communication as well.

In a scenario with more than one beacon advantageously information on the identity of the transmitter device is comprised in the transmit signals. This identity information can then be used for transmitting the response.

When such identity information is applied, the receiver device preferably performs a step of correlating the incoming measurements/data with the information on the identity of the transmitter device. In case of unidirectional communication, this identity information is used to link the measurements originating from the same transmitting device. In case of a bidirectional communication, the measurement data of the two links can be linked together provided that the result of the first communication (identity and indication of the received signal power) is encapsulated in the second communication signal. In one embodiment the reliability of the measurements can be estimated based on the correlation between transmitted powers and received powers, e.g. they should follow the same trend.

In one embodiment a received signal is given zero weight in the estimation step if the received signal power is not in correlation with the different transmit signal powers. Indeed, such anomalies should better not be considered in the location estimation, as the reliability of information coming from such measurements is probably doubtful. The decision whether to discard a measurement relies on an adaptive threshold which depends on the transmit signal power and the trend of these transmit powers and receiving powers.

In a preferred embodiment a higher weight is given to a lower transmit signal power. When a signal transmitted with a low transmit power is received, one knows that the receiver device is in a small perimeter around the transmitter.

Such information has to have an important contribution to the distance information used for the location estimation.

The estimation of the location is based on a multilateration, performed by weighing a set of error functions determined for the received signal powers.

In an advantageous embodiment the weights further take into account the geometry of the space. Taking also geometry into account adds further information and improves the accuracy.

The method as described is basically independent of the technology applied, which constitutes one of the main assets of the proposed solution. This is opposed to prior art solutions that were designed for determining location specifically with e.g. radio frequency or ultrasound communication technology. The invention is advantageously applied to RF technology, but also e.g. the ultrasound signals can be envisaged. In an advantageous embodiment this feature is exploited in the method by combining more than one technology for the signal communication. This further improves the reliability. In such case the weights preferably further take into account the communication technology used for transmitting the plurality of signals having a different transmit signal power.

In a second aspect the invention relates to a processing device for determining a location of a target device in connection with one or more beacons having a known position in a space, as specified in claim 7.

Such device is indeed suitable for use in the method as set out above. The processing device receives from the receiver device the indications of the received signal power of the at least two signals transmitted by a transmitter device. The computing means of the processor device then determines the weighted sum, derives distance information from the weighted sum and calculates an estimation of the location of the target device.

The invention further also relates to a target device for use in the method as previously described that comprises such a processing device. In this case the intelligence of the processor device is thus present in the target device.

Alternatively, the processing device is integrated in a beacon. Hence, in one aspect the invention also relates to such a beacon comprising the processor device.

In a further aspect the invention relates to a system for determining a location of a target device in a space, as specified in claim 9. In this scenario the intelligent processing device is a centrally deployed, stand-alone device capable of communicating with the target device and/or the one or more beacons.

## Brief Description of the Drawings

Fig. 1 illustrates a representative set-up with both small rooms with walls and larger open spaces. Some rooms house at least one reference device (i.e., a beacon) and other not.

Fig. 2 illustrates an embodiment of the invention wherein a transmitting device sends a plurality of signals at different transmit output power. These signals are received by a receiver device that determines an indication of the received signal power. The order in which the transmit output power is adjusted is not limited to the profiles shown.

Fig. 3 illustrates an embodiment relying on bidirectional communication. The output power of the response is based on the transmitted output power of the initial communication link.

Fig. 4 illustrates an embodiment relying on unidirectional communication. The communication can be initiated by the target device or by the reference device.

Fig. 5 illustrates a representative embodiment where multiple reference devices are used in order to improve the accuracy of the localization method. A number of communications flows is visualized.

Fig. 6 explains the concept of correlation of measurement data based on the transmit output power data available.

Fig. 7 demonstrates the principles of an adaptive threshold used to interpret the measurement data. Again the transmit output power is used as parameter.

Fig. 8 illustrates that the invention based on trapped output powers can be applied on various technologies. By combining multiple technologies, the accuracy can be further improved. The technology parameter can be taken into account in the weighting algorithm.

## Detailed Description of the Invention

The present invention exploits the use of different output powers of transmitted signals in order to obtain a more accurate location. Although the transmit output power in traditional systems may be adjustable, it is only done for power saving reasons and not as a means for location determination. A major advantage of the invention lies in its independency of the applied technology. Moreover, it can cope with an indoor environment comprising of many walls as well as large open indoor spaces and confined outdoor spaces.

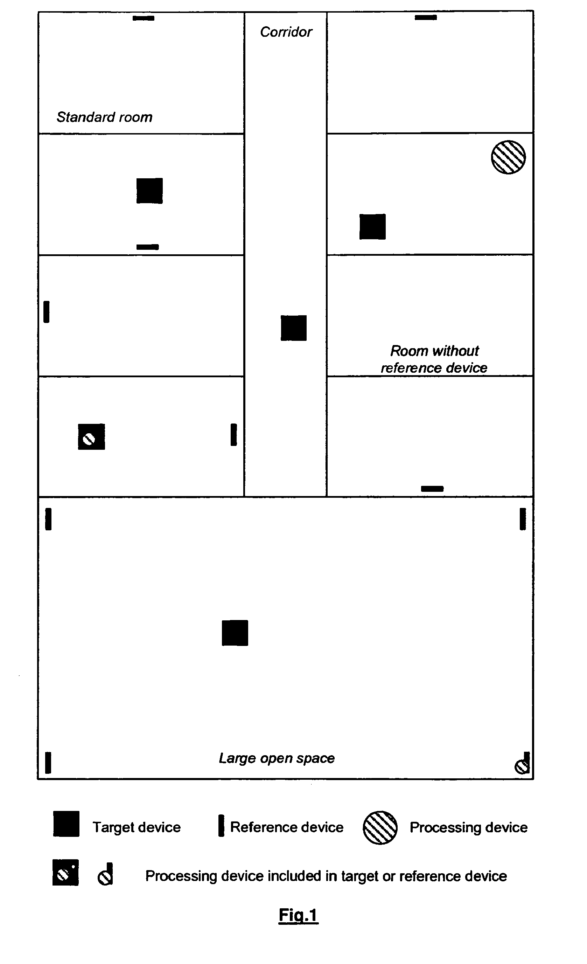

Fig. 1 illustrates a system according to one embodiment of the invention installed at an exemplary indoor environment. This environment includes a plurality of rooms with at least one reference device with a priori known location, a plurality of rooms with less than one reference device per room, a corridor and a large open space. In the shown embodiment each reference device comprises either a transmitter or a receiver, or both.

The system includes at least one target device the location of which should be determined. This target device could be attached to assets, people or any item one likes to know the location of. The target device has a unique ID which is linked to the identity of the item. Target devices and reference devices are capable of communicating with each other.

Furthermore, a processing device is required for determining a location of a target device. In the embodiment shown this processing device is a stand-alone device capable of communication with the target device and/or the one or more reference devices. In another embodiment this processing device is comprised in the target device or in a reference device.

Both target device and reference device are able to initiate a communication sequence for locating purposes. Other forms of communication such as configuration, forwarding data to a server is not considered at this point. In one embodiment this communication sequence is unidirectional. E.g. a reference device sends signals to the target without the target device responding back to the initiating reference device or, vice versa, the target device sends signals to one or more reference devices. In another embodiment this communication sequence is bidirectional : the receiving device transmits a response back to the initiator of the sequence. Hence, the target device or a reference device can act as a transmitter device.

Reference devices are referred to as devices of which the location is known to the processing device responsible of locating target devices. They can also be referred to as beacons. Both terms will be used throughout this description. Having a known location does not necessarily mean that this location has to be fixed.

*Description of the communication sequence and signals for locating a target device*

The method first comprises transmitting with a transmitter device two or more signals having a different transmit signal power. The transmitter device is the target device.

Secondly, these signals are received by a receiver device. The receiver device is a beacon of said one or more beacons and is obviously different from said transmitter device. The receiver device determines an indication of the received power for each of the received signals, which were transmitted with different output powers.

The indication of the received signal power is derived from the signal strength, e.g. the RSSI, and/or from a link quality indication (LQI). Such link quality is a metric of the current quality of the received signal. On the other hand, RSSI is simply a signal strength indication and does not care about the "quality" or "correctness" of the signal. LQI does not care about the actual signal strength, but the signal quality often is linked to signal strength. This is because a strong signal is likely to be less affected by noise and thus will be seen as "cleaner" or "more correct" by the receiver.

When the transmitter device transmits a signal at a specific configurable output power, this information about the signal power should be comprised in the transmitted signal. A preferable way of achieving this is to make use of a data field in the transmit signal encapsulating this information.

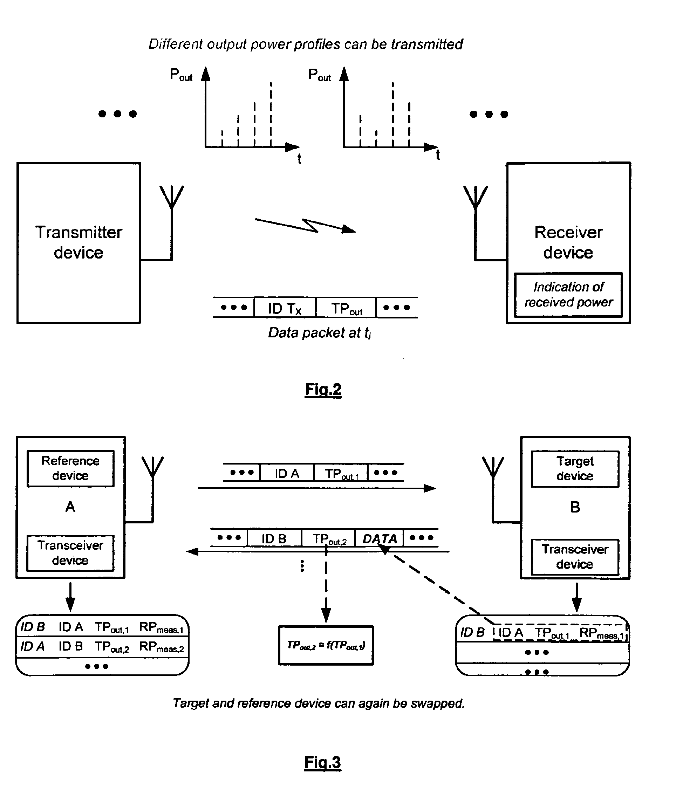

An exemplary embodiment, shown in Fig.2, illustrates the above principles: the transmit device sends a signal at output power P1 and encapsulates this information in a data field of the signal. This signal is received by a receiver device that determines e.g. by measurement an indication of the received power. Additionally, the receiver decodes the message and links the measured received power indication with the transmitted signal power as decoded from the message.

When multiple devices are used, as most often occurs in a real-life configuration, the unique ID of the transmit device is also encapsulated in the data field.

In an advantageous embodiment, illustrated in Fig. 3, the communication between target device and reference device is bidirectional. The receiver device then transmits a response to the received signal using a signal with a transmit signal power depending on the information on the transmit signal power in the received signal. Hence, the transmit signal power applied in the response signal is determined by the transmit power used for the original message. In this way two different measurements resulting in two data pairs (transmitted power, received power) are obtained with only a single bidirectional communication link. The power is selected such that a high reliability exists that the signal arrives at its destination. Too low and too high powers are therefore avoided, which improves the efficiency of the method described in this invention.

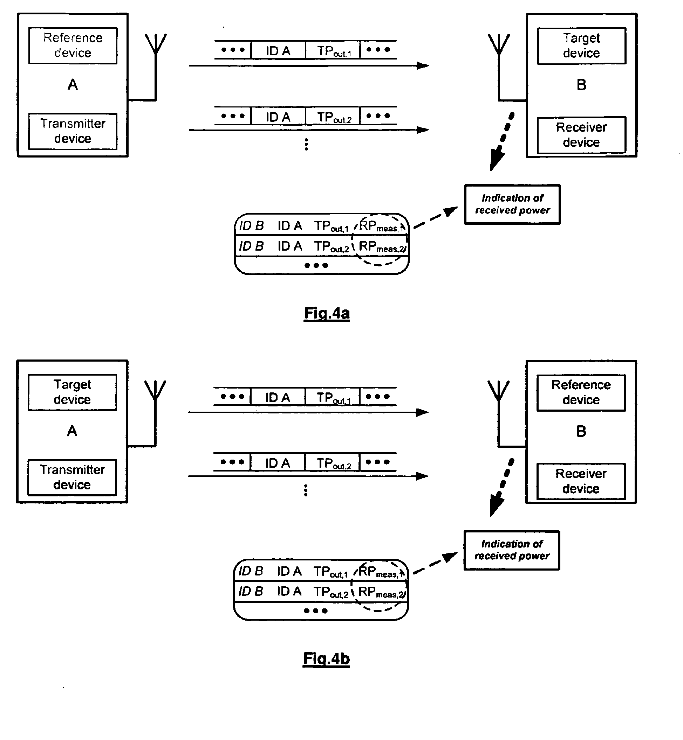

The invention is not limited to bidirectional communication and can be applied with only unidirectional communication as well (Fig. 4). In such embodiment there is no feedback about the selected transmit signal powers to the transmitter device. Therefore it is possible that at the lowest output power the signal does not arrive at its destination while the transmitter is not being informed of this failure. In the case of bidirectional communication, no response means that the signal has not arrived. The transmitter device can therefore adjust its output power in a more intelligent way.

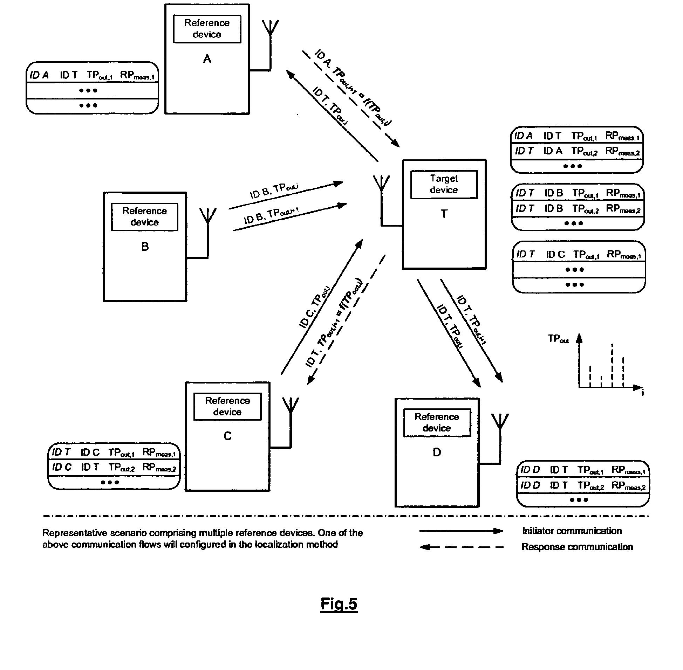

In a scenario with more than one beacon (see Fig. 5), the identity information of the transmitter device which is encapsulated in the data packet is used with the incoming measurements/data in a correlation step. In case of unidirectional communication (e.g., communication from reference device B to target device T or from target device T to reference device D), the measurements originating from the same transmitting device are linked with one another using this identity information.

In case of a bidirectional communication (e.g., communication from reference device C to target device T and back or from target device T to reference device A and back), the measurement data of the two links can be linked together under the condition that the result of the first communication (ID and indication of the received signal power) is encapsulated in the second communication signal. In this case the identity information is also used to send the response (addressing).

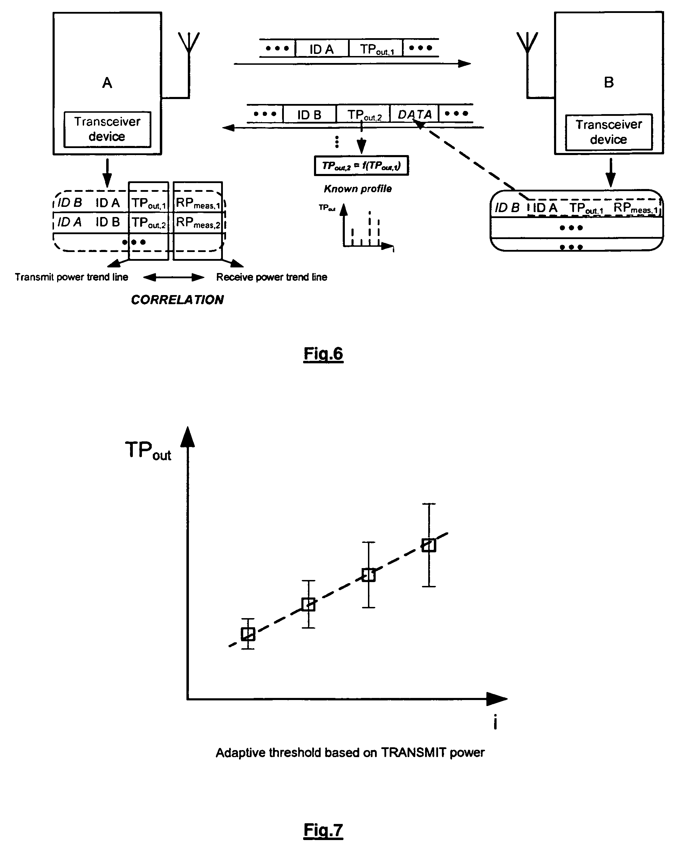

Correlation in this case is understood as transmit powers and receive powers which follow the same trend, e.g. when the transmit power has doubled, the same trend should be visible in the receive powers, obviously within a certain margin. This margin can be defined by an adaptive threshold where the threshold is defined by examining the trend line. In Fig. 6 this is further explained by applying the method on the example of a bidirectional scenario (which is one of the possibilities from Fig. 5). A typical communication and processing flow is described next.

Device A (target or beacon) transmits a signal at a given output power containing its ID and the value of the transmitted output power $TP_{out,1}$. This signal is received by device B that stores an indication of the received signal power $RP_{meas,1}$. Next, device B decodes the message and also stores the transmit signal power and both IDs of transmitting and receiving device. This results in the first line in the table shown in Fig. 6. Next, device B sends a response. Therefore it encapsulates the processed data in the data field (except for its own ID, because it has a dedicated field in this example). The output power used is dependent on the transmit signal power of the first signal. Then, the response is received by device A which performs the same steps as described above to generate the second line of the table. The first line was stored directly from the data field of the received message. As a final step, device A executes the correlation step. For instance if the transmit signal power $TP_{out,2}$ is twice $TP_{out,1}$, the processing device will verify if this trend is also visible in the indication of received signal powers $RP_{out2}$, and $RP_{out},1$. The allowed deviation is determined based on an adaptive threshold.

As illustrated in Fig.7 this threshold depends on the transmit output power and on the variance in received signal powers. In this way this threshold is adaptive, as opposed to traditional averaging approaches where outliers are filtered based on a fixed threshold. In this invention the threshold depends on properties of the transmitted signal, i.e. its output power.

Examination of this trend can give an indication on the reliability of the measurements. Alternatively, examination of this trend can highlight an abrupt change in situation.

Sufficient data points need to be taken into account to evaluate whether a measurement value which is far off the trend line, is a true outlier or that there is a change of the trend line due to a change in the environment, such as the target device having left the room or strongly attenuated signals due to wall penetration.

Evaluation and interpretation of trends and changes can be improved when the proposed method, which as already mentioned is technology independent, is applied on multiple technologies.

In an advantageous embodiment RF technology can be combined with ultrasound. Both technologies have different propagation properties and experience a different impact of e.g. walls. Combining both trend lines can give information on whether a measurement which falls outside the trend should be considered as an outlier or as a change in environment. For example, an abrupt change only in the ultrasound measurements can be explained if the target device has left the room. If only the RF measurement displays this change, this can be considered as an outlier caused e.g. by a metal object blocking the signal.

In one embodiment a received signal is given zero weight in the estimation step if the received signal power is not in line with the different transmit signal powers based of the above described processing. Indeed, such anomalies should better not be considered in the location estimation, as the reliability of information coming from such measurements is probably doubtful.

*Description of the method/algorithm for determining the location of a target device*

An important step in the method of the invention concerns estimating the location of the target device via information on the distance between transmitter and receiver. The information is derived from a weighted sum of the indications of the received signal power, whereby the weights of the weighted sum take into account the different transmit signal powers.

In conventional systems the transmitter device repeats its message a number of times to improve the robustness and to allow averaging. On the contrary, in this invention the transmitted output power is configurable as explained above in order to adapt the perimeter of reception around the node, thereby combining the advantages of proximity measurements (minimum output power) and ranging technologies. The interpretation of all measurements based on those signals sent with various output powers is done in a processing device which assigns weights, processes the IDs and preferably executes a multilateration algorithm in case multiple beacons are used, to further calculate the target device location.

When a signal with low transmit power is received, one knows that the receiving device is located in a small perimeter around the transmitter. If multiple receiver devices receive this signal, one even knows the direction based on multilateration, as will be further explained. A smaller perimeter or a closer proximity means that there is less spread on the measurements (because e.g. less obstacles can stand in the way). Therefore in a preferred embodiment a higher weight is given to a lower transmit signal power. This particular measurement will then have an important contribution to the distance information used for the location estimation.

The relationship between received signal powers and distance information is given by the traditional path loss model which is widely known in literature. In this model there exists a logarithmic relationship between power and distance. The path loss coefficient should be chosen such that it takes into account the additional loss in an indoor environment.

A dynamic path loss model can also be used to dynamically update the path loss coefficient to its environment based on the incoming measurements.

As the weights are a function of the transmitted output signal power, the assignments of their value also follow the same logarithmic law.

In a preferred embodiment the sum over all weights of measurements of a single reference device is normalized to one.

In a situation, not according to the invention, where only one beacon is used or where only information is available from a single transmitter device (hence, a beacon or target device), the location is preferably based on proximity, performed by a weighted sum of the received signal powers based on the various transmitted signal powers. The algorithm advantageously starts with a transmission at minimum output power, which is subsequently gradually increased. At a certain point in time, the transmitted message will be received. In an ideal situation the next messages which are transmitted at higher power should also be received. When information of different perimeters is present, the confidence level of the measurement data of that node can be improved as explained next.

An example is given for only two measurements. The idea can however be generalized, as the skilled person will readily appreciate.

- Measurement at $t_1$ results in $RSSI_{n_1,t_1}$ corresponding to a transmitted signal from node $n_1$ with transmit output power $P_{n_1},t_1 = P_1$.
- Measurement at $t_2$ results in $RSSI_{n_1,t_2}$ corresponding to a transmitted signal from node $n_1$ with transmit output power $Pn_1,t_2 = P_2$.

The two measurements are then weighted and normalized as follows:

$$\overline{RSSI_{n1}} = w_1(P_1)\frac{RSSI_{n1,t1}}{P_{n1,t1}} + w_2(P_2)\frac{RSSI_{n1,t2}}{P_{n1,t2}}$$

In this way the reliability of the average/normalized RSSI from a specific node can be iteratively improved. The weight is linked to the transmitted output power as described above.

According to the invention, the estimation of the location is based on a multilateration, performed by weighing a set of error functions determined for the received signal powers. Hence, the error functions form here indications of the received signal powers. In this way, measurements of multiple reference node can be combined within a given time interval to improve the accuracy of the location. The more data is available, the more accurate the result becomes.

As explained above, the reliability of the measurements depends on the output power and therefore the trapped output power approach is a suitable means to assign weight to the different measurements.

The weighted multilateration is performed as follows:

- Per measurement, the error function $f_{i,f}$ between estimated and measured distance is defined as

$$f_{i,j} = \sqrt{(x - x_i)^2 + (y - y_i)^2} - d_{i,j}$$
$$for\ i = 1..M\ (\#beacons)\ for\ j = 1..N\ (\#power\ levels)$$

where (x,y) is the position of the target device one is looking for, $(x_i, y_i)$ the known position of the reference node or beacon used in that measurement and $d_{i,j}$ a distance estimation based on the indication of the received signal power.
- Apply the least squares methodology to minimize the error function F.

$$F = \sum_{i=1}^{M} \sum_{j=1}^{N} (w_j \cdot f_{i,j})^2$$

where $w_j$ are the weights which are proportional to the transmitted output power as described above.

In an advantageous embodiment the weights further take into account the geometry of the space. Taking also geometry into account adds further information and improves the accuracy. For example if the coordinates of a third reference device lie on a straight line with two other reference devices, the weights are reduced because of the high sensitivity of the multilateration matrix.

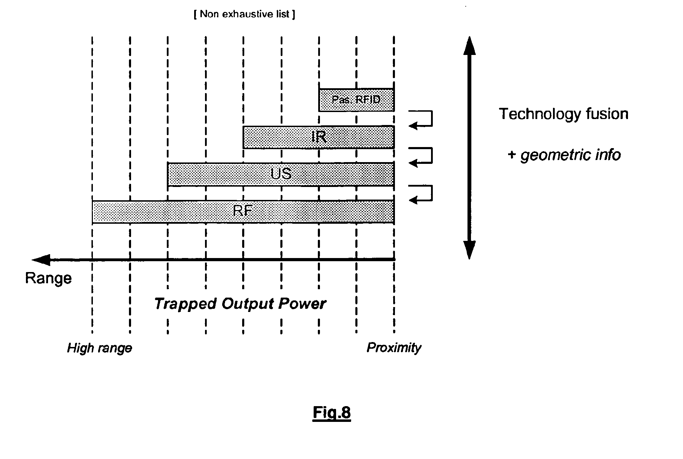

The method as described is basically independent of the technology applied as illustrated in Fig. 8. As previously described, the use of multiple technologies was introduced for evaluation and interpretation of trends and changes of measurements performed by a receiver device. Multiple technologies can also be used in the weights, which then also take into account the communication technology applied for transmitting the variety of signals with different transmit signal power:

$$wj = w_1(\text{output transmit power}).w_2(\text{communication technology})$$

The above described algorithm is executed in the processing device for determining a location of a target device. This processing device receives all indications of received powers and information required to calculate the weights and the weighted sum and multilateration in order to determine the target's location. The processing device can optionally be part of the target device or the reference device. Alternatively, it is a stand-alone processing device able to communicate with target device and/or one of more reference devices.

**Claims**

1.   A method for determining an indoor location of a target device in connection with a plurality of beacons having a known position in a space, the method comprising the steps of:

   - transmitting with a transmitter device a plurality of signals having different respective transmit signal powers, said transmitter device being said target device, and
   - receiving at least two of said plurality of transmitted signals with respective receiver devices, said respective receiver devices being beacons of said plurality of beacons, and determining for said at least two received signals an indication of the received signal power,

   **characterized in that** the method further comprises:

   - determining for each of said at least two received signals, based on a path loss model, an estimated distance between said transmitter device and said respective receiver device, yielding a set of error functions between said estimated distance and the actual distance to be determined,
   - assigning weights $w_j$ that take into account said different transmit signal powers, whereby a higher weight is given to a lower transmit signal power,
   - estimating the indoor location of said target device, based on multilateration, by weighing said set of error functions with said weights, whereby information on the transmit signal power is encapsulated in a data field comprised in said transmit signals and information on the identity of the transmitter device is comprised in said transmit signals, as follows:

      - defining the error function $f_{i,j}$ between estimated and measured distance per measurement as

$$f_{i,j} = \sqrt{(x - x_i)^2 + (y - y_i)^2} - d_{i,j}$$

for $i$ = 1..$M$ (#beacons) for $j$ = 1..$N$ (#power levels) where (x,y) is the position of the target device one is looking for, ($x_i$,$y_i$) the known position of the beacon used **in that** measurement and $d_{i,j}$ a distance estimation based on the indication of the received signal power,
- applying the least squares methodology to minimize the error function F

$$F = \sum_{i=1}^{M} \sum_{j=1}^{N} \left( w_j \cdot f_{i,j} \right)^2$$

2.  Method for determining an indoor location as in claim 1, whereby said indication of the received signal power is derived from the signal strength and/or from a link quality indication.

3.  Method for determining an indoor location as in any of claims 1 to 2, whereby a received signal is given zero weight in the estimation step if the received signal power is not in correlation with the different transmit signal powers.

4.  Method for determining an indoor location as in any of claims 1 to 3, whereby said receiver device transmits a response with a transmit signal power depending on said information on the transmit signal power in the received signal.

5.  Method for determining an indoor location as in any of the previous claims, wherein said weights further take into account the geometry of the space.

6.  Method for determining an indoor location as in any of the previous claims, wherein said weights further take into account the communication technology used for transmitting said plurality of signals having a different transmit signal power.

7.  Processing device for determining an indoor location of a target device in connection with a plurality of beacons having a known position in a space, the processing device comprising

    - receiving means for receiving indications of the received signal power of at least two signals transmitted with different respective transmit signal powers by a target device,

    **characterized in that** said processing device further comprises:

    - computing means for determining for each of said at least two received signals, based on a path loss model, an estimated distance between said transmitter device and said receiving means, yielding a set of error functions between said estimated distance and the actual distance to be determined, said computing means further arranged for assigning weights $w_j$ that take into account said different transmit signal powers, whereby a higher weight is given to a lower transmit signal power, and for estimating the indoor location of said target device, based on multilateration, by weighing said set of error functions with said weights, as follows:

        - defining the error function $f_{i,j}$ between estimated and measured distance per measurement as

$$f_{i,j} = \sqrt{(x - x_i)^2 + (y - y_i)^2} - d_{i,j}$$

        for $i$ = 1..$M$ (#beacons) for $j$ = 1..$N$ (#power levels) where (x,y) is the position of the target device one is looking for, ($x_i$,$y_i$) the known position of the beacon used **in that** measurement and $d_{i,j}$ a distance estimation based on the indication of the received signal power,
        - applying the least squares methodology to minimize the error function F

$$F = \sum_{i=1}^{M} \sum_{j=1}^{N} \left( w_j \cdot f_{i,j} \right)^2$$

**8.** Beacon for use in the method as in any of claims 1 to 6, comprising a processing device as in claim 7.

**9.** System for determining an indoor location of a target device in a space, said system comprising

- the processing device as in claim 7,
- a plurality of beacons arranged for transmitting and receiving signals and a target device arranged for being in connection with said plurality of beacons and for transmitting and receiving signals, whereby said target device and said plurality beacons are arranged for determining an indication of the received signal power of a received signal and for communicating with the processing device.

**Patentansprüche**

**1.** Verfahren zur Bestimmung einer Raumposition einer Zielvorrichtung in Verbindung mit mehreren, in einem Raum eine bekannte Position aufweisenden Leuchten, wobei das Verfahren die folgenden Schritte aufweist:

- Senden mehrerer, jeweils unterschiedliche Signalleistung aufweisender Signale mit einer Sendervorrichtung, wobei die Sendervorrichtung die Zielvorrichtung ist und
- Empfangen von wenigstens zwei der mehreren gesendeten Signal mit jeweiligen Empfängervorrichtungen, wobei die jeweiligen Empfängervorrichtungen Leuchten der mehreren Leuchten sind, und Bestimmen für wenigstens zwei der empfangenen Signale eine Indikation für die empfangene Signalleistung,

**dadurch gekennzeichnet, dass** das Verfahren ferner Folgendes aufweist:

- Bestimmen für jedes der wenigstens zwei empfangenen Signale auf Basis eines Pfadverlustmodells eines abgeschätzten Abstands zwischen der Sendervorrichtung und der Empfängervorrichtung, was einen Satz von Fehlerfunktionen zwischen dem abgeschätzten Abstand und dem tatsächlich zu bestimmenden Abstand ergibt,
- Zuordnen von Gewichten $w_j$, die die unterschiedlichen Sendesignalleistungen einbeziehen, wobei ein höheres Gewicht einer niedrigeren Sendesignalleistung zugeteilt wird,
- Abschätzen der Raumposition der Zielvorrichtung auf Basis von Multilateration durch Gewichtung des Satzes von Fehlerfunktionen mit den Gewichten, wobei Information über die gesendete Signalleistung in einem Datenfeld, das in den Sendesignalen enthalten ist, eingekapselt ist und Information über die Identität der Sendervorrichtung in den Sendesignalen enthalten ist, wie folgt:

- Bestimmen der Fehlerfunktion $f_{i,j}$ zwischen abgeschätztem und gemessenem Abstand gemessen als

$$f_{i,j} = \sqrt{(x - x_i)^2 + (y - y_i)^2} - d_{i,j}$$

für $i = 1 .. M$ (# Leuchten), für $j = 1 .. N$ (# Leistungspegel), wobei $(x, y)$ die Position der Zielvorrichtung ist, nach der gesucht wird, $(x_i, y_i)$ die bekannte Position der bei dieser Messung benutzten Leuchte ist, und wobei $d_{i,j}$ ein Abstandsabschätzung auf Basis der Indikation der empfangenen Signalleistung ist,
- Anwenden der Methode der kleinsten Quadrate zum Minimieren der Fehlerfunktion F

$$F = \sum_{i=1}^{M} \sum_{j=1}^{N} \left( w_j \cdot f_{i,j} \right)^2$$
.

**2.** Verfahren zur Bestimmung einer Raumposition gemäß Anspruch 1, wobei die Indikation der empfangenen Signalleistung von der Signalstärke und/oder von einer Verknüpfungsqualitätsindikation abgeleitet wird.

**3.** Verfahren zur Bestimmung einer Raumposition gemäß einem der Ansprüche 1 oder 2, wobei einem empfangenen Signal null Gewicht im Abschätzungsschritt gegeben wird, wenn das empfangene Signal nicht mit den verschiedenen Sendesignalleistungen korreliert.

**4.** Verfahren zur Bestimmung einer Raumposition gemäß einem der Ansprüche 1 bis 3, wobei die Empfängervorrichtung eine Antwort mit einer Sendesignalleistung in Abhängigkeit von der Information über die Sendesignalleistung im empfangenen Signal sendet.

**5.** Verfahren zur Bestimmung einer Raumposition gemäß einem der vorhergehenden Ansprüche, wobei die Gewichte ferner die Geometrie des Raums einbeziehen.

**6.** Verfahren zur Bestimmung einer Raumposition gemäß einem der vorhergehenden Ansprüche, wobei die Gewichte ferner die für das Sende der mehreren, unterschiedliche Signalleistung aufweisenden Signal verwendeten Kommunikationstechnik einbeziehen.

**7.** Verarbeitungsvorrichtung zum Bestimmen einer Raumposition einer Zielvorrichtung in Verbindung mit mehreren, in einem Raum eine bekannte Position aufweisenden Leuchten, wobei die Verarbeitungsvorrichtung Folgendes aufweist:

- Empfangsmittel zum Empfangen von Indikationen der empfangenen Signalleistung von wenigstens zwei, mit jeweils unterschiedlichen Sendesignalleistungen von einer Zielvorrichtung gesendeten Signalen,

**dadurch gekennzeichnet, dass** die Verarbeitungsvorrichtung ferner Folgendes aufweist:

- Berechnungsmittel zum Bestimmen für jedes der wenigstens zwei empfangenen Signale auf Basis eines Pfadverlustmodells eines abgeschätzten Abstands zwischen der Sendervorrichtung und der Empfängervorrichtung, was einen Satz von Fehlerfunktionen zwischen dem abgeschätzten Abstand und dem tatsächlich zu bestimmenden Abstand ergibt, wobei die Berechnungsmittel ferner angeordnet sind für ein Zuordnen von Gewichten $w_j$, die die unterschiedlichen Sendesignalleistungen einbeziehen, wobei ein höheres Gewicht einer niedrigeren Sendesignalleistung zugeteilt wird, und zum Abschätzen der Raumposition der Zielvorrichtung auf Basis von Multilateration durch Gewichtung des Satzes von Fehlerfunktionen mit den Gewichten, wie folg:

- Bestimmen der Fehlerfunktion $f_{i,j}$ zwischen abgeschätztem und gemessenem Abstand gemessen als

$$f_{i,j} = \sqrt{(x - x_i)^2 + (y - y_i)^2} - d_{i,j}$$

für $i = 1 .. M$ (# Leuchten), für $j = 1 .. N$ (# Leistungspegel), wobei $(x, y)$ die Position der Zielvorrichtung ist, nach der gesucht wird, $(x_i, y_i)$ die bekannte Position der bei dieser Messung benutzten Leuchte ist, und wobei $d_{i,j}$ ein Abstandsabschätzung auf Basis der Indikation der empfangenen Signalleistung ist,
- Anwenden der Methode der kleinsten Quadrate zum Minimieren der Fehlerfunktion F

$$F = \sum_{i=1}^{M} \sum_{j=1}^{N} \left( w_j \cdot f_{i,j} \right)^2 .$$

**8.** Leuchte zum Anwenden bei dem Verfahren gemäß einem der Ansprüche 1 bis 6, aufweisend eine Verarbeitungsvorrichtung gemäß Anspruch 7.

**9.** System zur Bestimmung einer Raumposition einer Zielvorrichtung, wobei das System Folgendes aufweist:

- die Verarbeitungsvorrichtung gemäß Anspruch 7,
- mehrere Leuchten die für ein Senden und Empfangen von Signalen angeordnet sind, und eine Zielvorrichtung, die in Verbindung mit den mehreren Leuchten und für ein Senden und Empfangen von Signalen angeordnet ist, wobei die Zielvorrichtung und die mehreren Leuchten für ein Bestimmen einer Indikation der empfangenen Signalleistung eines empfangenen Signals und für ein Kommunizieren mit der Verarbeitungsvorrichtung angeordnet ist.

**Revendications**

**1.** Procédé pour déterminer un emplacement intérieur d'un dispositif cible en relation avec une pluralité de balises ayant une position connue dans un espace, le procédé comprenant les étapes de :

- émission avec un dispositif émetteur d'une pluralité de signaux ayant différentes puissances respectives de signal d'émission, ledit dispositif émetteur étant ledit dispositif cible, et
- réception d'au moins deux de ladite pluralité de signaux émis avec des dispositifs récepteurs respectifs, lesdits dispositifs récepteurs respectifs étant des balises de ladite pluralité de balises, et détermination pour lesdits au moins deux signaux reçus d'une indication de la puissance de signal reçu,

**caractérisé en ce que** le procédé comprend en outre :

- la détermination pour chacun desdits au moins deux signaux reçus, en se basant sur un modèle de perte de chemin, d'une distance évaluée entre ledit dispositif émetteur et ledit dispositif récepteur respectif, donnant un ensemble de fonctions d'erreur entre ladite distance évaluée et la distance réelle à déterminer,
- l'attribution de poids $w_j$ qui prennent en compte lesdites différentes puissances de signal d'émission, de sorte que l'on donne un poids supérieur à une puissance de signal d'émission inférieure,
- l'évaluation de l'emplacement intérieur dudit dispositif cible, en se basant sur une multilatération, en pondérant ledit ensemble de fonctions d'erreur avec lesdits poids, de sorte que des informations sur la puissance de signal d'émission sont encapsulées dans un champ de données compris dans lesdits signaux d'émission et des informations sur l'identité du dispositif émetteur sont comprises dans lesdits signaux d'émission, comme suit :

- définition de la fonction d'erreur $f_{i,j}$ entre la distance évaluée et la distance mesurée par une mesure comme

$$f_{i,j} = \sqrt{(x - x_i)^2 + (y - y_i)^2} - d_{i,j}$$

pour $i = 1 .. M$ (#balises) pour $j = 1 .. N$ (#niveaux de puissance)
où $(x, y)$ est la position du dispositif cible que l'on regarde, $(x_i, y_i)$ est la position connue de la balise utilisée dans cette mesure et $d_{i,j}$ est une évaluation de distance basée sur l'indication de la puissance de signal reçue,

- application de la méthodologie des moindres carrés pour minimiser la fonction d'erreur F

$$F = \sum_{i=1}^{M} \sum_{j=1}^{N} (w_j \cdot f_{i,j})^2$$

**2.** Procédé pour déterminer un emplacement intérieur selon la revendication 1, de sorte que ladite indication de la puissance de signal reçu est obtenue à partir de l'intensité de signal et/ou d'une indication de qualité de liaison.

**3.** Procédé pour déterminer un emplacement intérieur selon l'une quelconque des revendications 1 à 2, de sorte que l'on donne un poids nul à un signal reçu dans l'étape d'évaluation si la puissance de signal reçu n'est pas en corrélation avec les différentes puissances de signal d'émission.

4. Procédé pour déterminer un emplacement intérieur selon l'une quelconque des revendications 1 à 3, de sorte que ledit dispositif récepteur transmet une réponse avec une puissance de signal d'émission en fonction desdites informations sur la puissance de signal d'émission dans le signal reçu.

5. Procédé pour déterminer un emplacement intérieur selon l'une quelconque des revendications précédentes, dans lequel lesdits poids prennent de plus en compte la géométrie de l'espace.

6. Procédé pour déterminer un emplacement intérieur selon l'une quelconque des revendications précédentes, dans lequel lesdits poids prennent de plus en compte la technologie de communication utilisée pour émettre ladite pluralité de signaux ayant une puissance de signal d'émission différente.

7. Dispositif de traitement pour déterminer un emplacement intérieur d'un dispositif cible en relation avec une pluralité de balises ayant une position connue dans un espace, le dispositif de traitement comprenant

   - un moyen de réception pour recevoir des indications de la puissance de signal reçue d'au moins deux signaux émis avec des puissances différentes respectives de signal d'émission par un dispositif cible,

   **caractérisé en ce que** ledit dispositif de traitement comprend en outre :

   - un moyen de calcul pour déterminer pour chacun desdits au moins deux signaux reçus, en se basant sur un modèle de perte de chemin, une distance évaluée entre ledit dispositif émetteur et ledit moyen de réception, donnant un ensemble de fonctions d'erreur entre ladite distance évaluée et la distance réelle à déterminer, ledit moyen de calcul étant en outre agencé pour attribuer des poids $w_j$ qui prennent en compte lesdites puissances différentes de signal d'émission, de sorte que l'on donne un poids supérieur à une puissance inférieure de signal d'émission, et pour évaluer l'emplacement intérieur dudit dispositif cible, en se basant sur une multilatération, en pondérant ledit ensemble de fonctions d'erreur avec lesdits poids, comme suit :

   - définition de la fonction d'erreur entre la distance évaluée et la distance mesurée par mesure par

$$f_{i,j} = \sqrt{(x - x_i)^2 + (y - y_i)^2} - d_{i,j}$$

   pour $i = 1 .. M$ (#balises) pour $j = 1 .. N$ (#niveaux de puissance) où $(x, y)$ est la position du dispositif cible que l'on regarde, $(x_i, y_i)$ est la position connue de la balise utilisée dans cette mesure et $d_{i,j}$ est une évaluation de distance basée sur l'indication de la puissance de signal reçu,
   - application de la méthodologie des moindres carrés pour minimiser la fonction d'erreur F

$$F = \sum_{i=1}^{M} \sum_{j=1}^{N} \left( w_j \cdot f_{i,j} \right)^2$$

8. Balise pour utilisation dans le procédé selon l'une quelconque des revendications 1 à 6, comprenant un dispositif de traitement selon la revendication 7.

9. Système pour déterminer un emplacement intérieur d'un dispositif cible dans un espace, ledit système comprenant

   - le dispositif de traitement selon la revendication 7,
   - une pluralité de balises agencées pour émettre et recevoir des signaux et un dispositif cible agencé pour être en relation avec ladite pluralité de balises et pour émettre et recevoir des signaux, de sorte que ledit dispositif cible et ladite pluralité de balises sont agencés pour déterminer une indication de la puissance de signal reçu d'un signal reçu et pour communiquer avec le dispositif de traitement.

Fig.1

*Different output power profiles can be transmitted*

*Data packet at $t_i$*

**Fig.2**

*Target and reference device can again be swapped.*

**Fig.3**

**Fig.4a**

**Fig.4b**

Representative scenario comprising multiple reference devices. One of the
above communication flows will configured in the localization method

→ Initiator communication

←‑‑‑‑‑ Response communication

**Fig.5**

**Fig.6**

Adaptive threshold based on TRANSMIT power

**Fig.7**

[ Non exhaustive list ]

Pas. RFID

IR

US

RF

Technology fusion

+ *geometric info*

Range

*Trapped Output Power*

*High range*        *Proximity*

**Fig.8**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2065726 A2
- US 2009141591 A
- US 4494119 A
- US 6404381 B